# EUROPEAN PATENT SPECIFICATION

(11) **EP 2 012 291 B1**
(45) Date of publication and mention of the grant of the patent: **17.10.2012**
(21) Application number: 07111715.4
(22) Date of filing: 04.07.2007
(51) Int. Cl.: G09B 21/00

(54) **Electromechanical relief display**
Elektromechanische Reliefanzeige
Dispositif electromécanique d'affichage en relief

(43) Date of publication of application: 07.01.2009
(73) Proprietor: Optelec Development B.V., 2993 LT Barendrecht (NL)
(72) Inventor: van Hees, Lukas Wilhelmus, 2275 BH, Voorburg (NL); van Egmond, Maarten, 2231 EZ, Rijnsburg (NL)
(74) Representative: Jansen, Cornelis Marinus

(56) References cited:
- EP-A- 1 396 834
- WO-A-94/27330
- DE-A1- 3 811 406
- DE-A1- 4 213 552

## Description

The present invention relates to an electromechanical relief display device comprising:
a frame;
at least one tactile member provided in said frame which is movable between at least a first position and a second position such that by feeling for said tactile member a user determines in which position said tactile member is;
an oblong piezoelectric flexion member which may be bent (in a bending plane) under the influence of voltages applied thereto and subsequently flex back if these voltages are removed or if voltages with and inverted polarity are applied thereto; and
supporting means for supporting said flexion member on said frame at two opposite sides of the flexion member wherein the flexion member comprises a contact-location separated from the first and second location which is coupled to the tactile member for moving the tactile member between the first and second position by bending or flexing back the flexion member.

Such a display is known from US 4,758,165. Touching the device, a person can determine in which position the tactile member is. Such a known electromechanical relief display can be used as a braille cell for forming a braille character.

In the known display the contact location is usually at the end point of the flexion member so that a bending of the flexion member results in a as large as possible displacement of the corresponding tactile member. In order to make full use of the deflection of the flexion member the neutral position of the contact location must be at a desired position as accurate as possible. Hence, it is important that the flexion member is attached to the frame and aligned relative to the frame as accurate as possible in a desired manner. In order to achieve this, it is known that the flexion member is supported by the supporting means at two opposite sides of the flexion member. Furthermore, in order to adjust the flexion member at its desired direction relative to the frame, it is known to bend a conducting wire which is in fact an extension of a central conductive layer of the flexion member in such a manner that the flexion member is aligned in its desired direction within the frame. A disadvantage of such a display is that each flexion member has to be individually aligned by bending the wire. In practice an electromechanical relief display is provided with eight tactile members and eight flexion members each of which determine the position within the frame of one of the tactile members. Hence, for only one relief display, eight flexion members have to be individually adjusted. In practice, this is carried out manually meaning that it is very time consuming and relatively costly.

Furthermore, it is seen as an advantage if the oblong piezoelectric flexion member can be made relatively short. If the flexion member is shortened, this means that its bending angle should increase if the distance between the first and second position of the tactile member remains the same. If the flexion member is a bimorph flexion member, the flexion member may be shortened because a bimorph flexion member may bend over a relatively large angle. An advantage of a shortened flexion member is that the display can be manufactured in a more compact design and is thereby less space consuming. This is important as users demand increasingly portable, thus compact, devices.
However, the alignment of a flexion member becomes even more critical if the length of the flexion member is decreased.

Therefore, the present invention has one as its objects to avoid the required manually adjustment of the flexion member in the frame as discussed above.

According to one aspect of the invention, the electromechanical relief display is accordingly characterize in that the flexion member is a bimorph flexion member wherein the supporting means comprises at least a first and second supporting member for supporting the flexion member on at least a first and second location at a first side of the two opposite sides of the flexion member respectively and at least a third supporting member for supporting the flexion member on at least a third location at a second side of the two opposite sides of the flexion member wherein the first location and the second location are separate from each other and wherein at least one of the supporting members comprises spring means for pushing this supporting member against the flexion member so that the flexion member is clamped in between the supporting members and wherein the contact-location of the flexion member is separated from the first, third and second location.

Due to the spring means pushing the relevant at least one, supporting member against the flexion member, the flexion member can automatically be aligned in the desired direction relative to the frame without manually adjustments. If the display is manufactured, a flexion member is inserted between the supporting members at its desired position after which due to the spring means, the direction of the flexion member relative to the frame is automatically obtained. Preferably it holds that the supporting means comprises a fourth supporting member for supporting the flexion member at a fourth location on the second side separate from the third location. Due to the fourth supporting member a very stable fixation of the flexion member in the frame can be obtained. Furthermore these supports allow to maximise perceived stiffness of the flexion member and at the same time maximises the bending angle.

More particularly, it holds that the first supporting member and the third supporting member lay opposite each other on the opposite sides of the flexion member and that the second supporting member and the fourth supporting member lay opposite each other on the opposite sides of the flexion member wherein at least one of the first and third supporting member comprises a spring means for clamping the flexion between the first and third supporting member. In such arrangement a very stable positioning of the flexion member to the frame is obtained. Preferably it holds in that case that at least one of the second and fourth supporting members comprise a spring means for clamping the flexion between the second and fourth supporting member. In such an embodiment it is relatively easy to slide the flexion member between the supporting members during manufacturing. Preferably it holds that one of the first and third supporting members comprises opening means for clamping the flexion member between the first and third supporting member wherein another of the first and third supporting members is fixed and that one of the second and fourth supporting members comprises spring means for clamping the flexion member between the second and fourth supporting member wherein another of the second and fourth supporting member is fixed, the spring means allow to zero out thickness variations that are inherent to piezoelectric flexion members, for example of types which are used in Braille cells. More preferably it holds that each of the first and second supporting member comprises the spring means and each of the third and fourth supporting member is fixed or that each of the third and fourth supporting member comprises the spring means and each of the first and second supporting member is fixed. In that case both a zero out of thickness variations as well as a most accurate alignment of the flexion member in its desired direction is obtained. The alignment is automatically obtained on the bases of the fixed supporting members independent from the thickness of the flexion member. Alternatively, it holds that each of the first and third supporting member comprises a spring means for clamping the flexion between the first and third supporting member. It also preferably holds that each of the second and fourth supporting member comprises a spring means for clamping the flexion between the first and third supporting member. In that case it is most easy to insert the flexion member between the spring because each supporting member can adapt its position relative to the frame for receiving the flexion member between the support members so that sufficient space for manipulating the flexion member between the support members can be obtained during manufacturing without the risk of damaging the frame and/or the supporting means.

If the flexion member is bended by applying said voltages, it bends in a bending plane perpendicular to the opposite sides of the flexion member. Preferably it holds that each of the spring means pushes against one of the opposite sides of the flexion member in or opposite a direction wherein the flexion bends (or in a direction laying in a bending plane wherein the flexion bends) under influence of the voltages.

According to a preferred embodiment it holds that the display comprises a plurality of tactile members and a corresponding plurality of the flexion members wherein each tactile member is moved by one of the flexion members and wherein each of the flexion members are supported on said frame by the supporting means. More particularly it preferably holds in that case that each of the flexion members are supported on said frame by the supporting means in a mutual similar manner. According to a very practical embodiment for obtaining a braille cell the display is characterized in that the display comprises a first set of flexion members (preferably having the same length) wherein the flexion members of the first set are mounted to the frame (preferably in a stepped pattern) one above the other in a common bending plane. Preferably it holds that the supporting members corresponding to the first set are located relative to the frame per flexion member in the same pattern as the flexion members of the first set are located relative to the frame. According to a very advantageous embodiment it further holds that the first set comprises pairs of first and second flexion members laying adjacent and separated to each other in the bending plane wherein a first and second supporting member supporting the first side of the first flexion member and a third and fourth supporting member supporting the second side of the second flexion member are part of a single clip. Because a single clip is used, the display can be manufactured easy with a limited amount of components. According to a practical embodiment it preferably further holds that the display comprises a second set of flexion members (preferably having the same length) wherein the flexion members of the second set are mounted to the frame (preferably in a stepped pattern) one above the other in a common bending plane. Preferably it also holds for the flexion members of the second set that the supporting members corresponding to the second set are located relative to the frame per flexion member in the same pattern as the flexion members of the second set are located relative to the frame. According to a very advantageous embodiment it holds that the second set comprises pairs of first and second flexion members laying separated and adjacent to each other in the bending plane wherein a first and second supporting member supporting the first side of the first flexion member of the first set and a third and fourth supporting member supporting the second side of the second flexion member of the first set are part of a single clip. Also this embodiment has the advantage that the display can be manufactured efficiently with a minimum amount of components. It holds preferably in that case that the bending planes of the first and second set extend parallel to each other wherein the positions of the flexion members of the first set and the positions of the flexion members of the second set are shifted relative to each other in a direction perpendicular to the bending planes. In that case the display may be used for displaying a braille character.

According to a very advantageous embodiment it holds that the first flexion member of the first set and the first flexion member of the second set are shifted relative to each other in a direction perpendicular to one of the bending planes and the second flexion member of the first set and the second flexion member of the second set are shifted relative to each other in a direction perpendicular to one of the bending planes wherein a first and second supporting member supporting the first side of the first flexion member of the first set, a third and fourth supporting member supporting the second side of the second flexion member of the first set, a first and second supporting member supporting the first side of the first flexion member of the second set and a third and fourth supporting member supporting the second side of the second flexion member of the second set are part of a single clip. Hence, it that case a single clip of eight supporting members each comprising one of said springs. Hence, in that case a minimum amount of components are used and manufacturing the display is very easy because only one clip has to be placed for positioning in place eight supporting members each comprising a spring means.

A display according to the invention is preferably further characterized in that said flexion members each are at least provided with two layers of piezoelectric ceramic material and a conductive central layer wherein the conductive central layer is attached to and sandwiched between the two layers of piezoelectric ceramic material. According to a very highly preferred embodiment it holds that layers of piezoelectric ceramic material of two adjacent flexion members of the first set and the second set respectively and which face each other are conductively connected to a common voltage supply line and that layers of piezoelectric ceramic material of each flexion member of the first set and the second set are connected to different voltage supply lines. Preferably in that case the central conductive layers of each flexion member of the first and second set is connected to an individual voltage control supply line. Because the layers which form the piezoelectric ceramic material are usually outer layers of the flexion member and because these layers of adjacent flexion members which face each other are conductively connected to a common voltage supply line, the risk of short circuiting is avoided if these layers which face each other would contact each other if they are for example bended towards each other. This is different from conventional displays wherein such layers of adjacent flexion members which face each other due to because the flexion members being stacked one on top of the other, are provided with different voltages wherein two such layers belonging to one and the same flexion member are also provided with different voltages. In that case short circuiting will happen if such opposing layers contact each other. It is known to lower the risk of short circuiting by applying very thin and weak flexion members and/or to provide isolating baffles between said layers which face each other. Because according to said preferred embodiment of the invention short circuiting can not occur it is possible to use more powerful flexion members compared the flexion members used in the conventional products. This makes the flexion member feel very rigid which helps blind users to identify the individual tactile members more accurately in case the display for example is used as a Braille cell. Because no short circuit preventing baffles are needed, the Braille cell can even be made smaller without using thinner flexion members than previous models.

In case the single clip which provides eight supporting members as discussed above is manufactured from a conductive material such as a metal, it has the further advantage that the layers of piezoelectric material of two adjacent flexion members of the first set and the second set respectively and which face each other can be conductively connected to each other by means of the single spring clip. Hence, by means of a single spring clip four of such layers can be conductively connected to each other.

According to a preferred embodiment it further holds that the display is further provided with a PCB comprising a electronic circuit for supplying voltages to the layers of piezoelectric ceramic material of the flexion members wherein the central conductive layer is directly conductively connected to a voltage supply line of the PCB <without intermediate electric leads or wires. The intermediate electric lead or wire can now be avoided because it is no longer necessary as opposed to the known systems to use these leads for adjusting the direction of the flexion members within the display.

Preferably it further holds that the display is provided with rigid outer walls extending parallel to a bending plane or a bending direction of the at least one flexion member wherein the at least one flexion member may bend. It also preferably holds that each clip comprises a base body and a plurality of U-shaped leaf springs attached to the central body portion wherein each U-shaped leaf spring forms a supporting member including a spring means. In that case the single spring clips as discussed above can have a very simple design. In that case a spring clip comprises a central body portion and U-shaped leaf springs wherein each U-shape leaf spring forms a supporting member comprising a spring means.

The invention will now be discussed on the basis of the following drawings wherein:
Fig. 1 shows a possible embodiment of an electromechanical relief display, taken into pieces;
Fig. 2 shows a side view of a frame, tactile members, supporting means, flexion members and a PCB board of the display according to figure 1;
Fig. 3 shows two neighbouring flexion members and their corresponding multi spring clips of the supporting means of the display according to figure 1;
Fig. 4 shows a side view of the neighbouring flexion members and their clips as shown in figure 3;
Fig. 5 shows a side view of the frame, tactile members, supporting means, flexion members and a PCB board of the display according to figure 1;

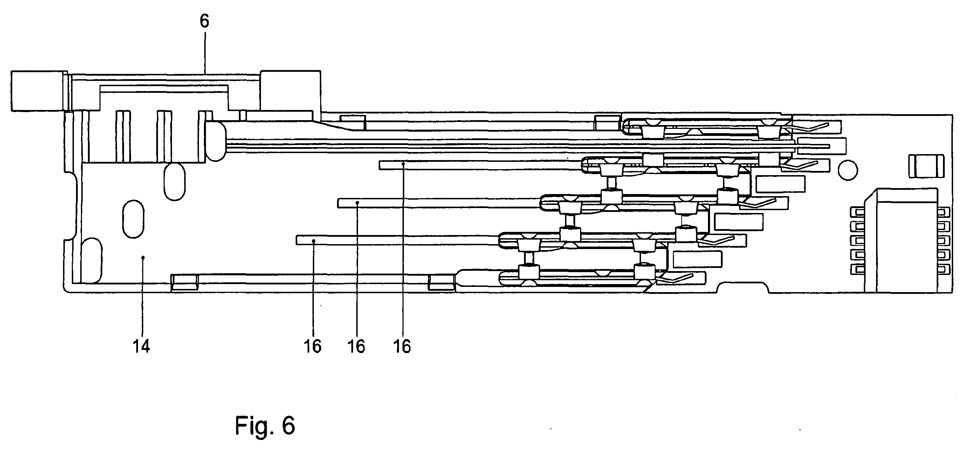

Fig. 6 shows another side view of the frame, supporting means, a single flexion member and a PCB board of the display according to figure 1;

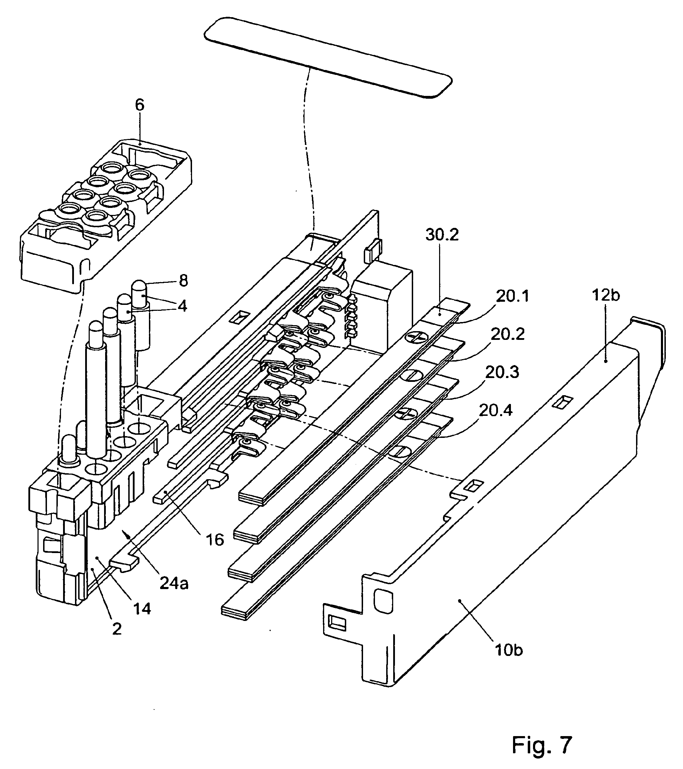

Fig. 7 shows a side view of the frame, tactile members, supporting means, some flexion members, a PCB board, an outer surface, and an outer side wall of the display according to figure 1; and
Fig. 8 shows a side view of the frame, supporting means, and some flexion members during an assembling stage.

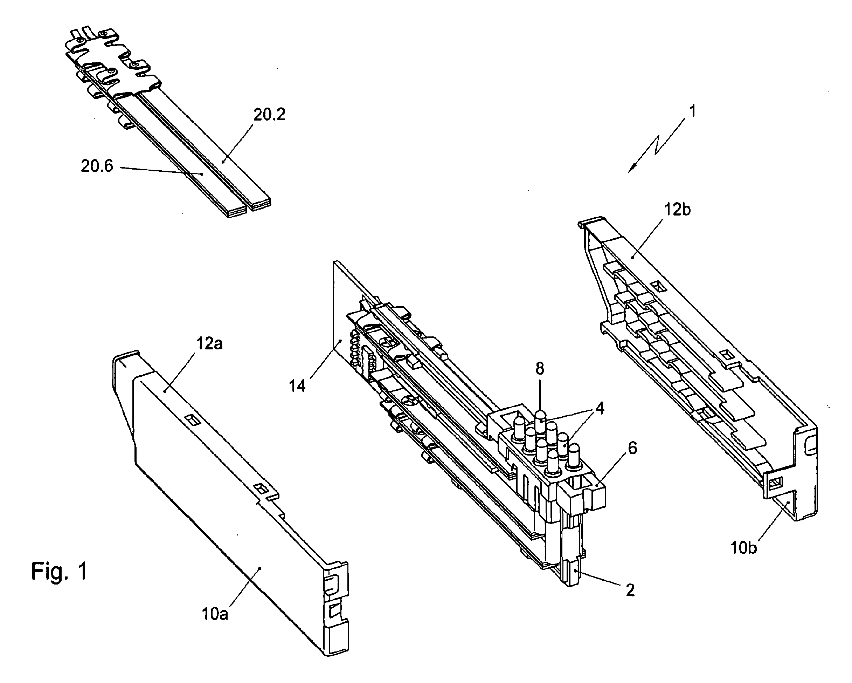

In figure 1 reference number 1 indicates an electromechanical relief display according to a possible embodiment of the invention taken apart into some components. The display 1 is provided with a plastic frame 2 and a plurality of tactile members 4 provided in said frame which are each movable between at least a first position and a second position such that by feeling of said tactile members the user can determine in which position said tactile members are. The relief display comprises an upper surface wall 6 comprising a plurality of openings through which the tactile members extend. In a first position of a tactile member a top 8 of a tactile member lays at least substantially in a plane going through the outside surface of the upper wall 6. In the second position a tactile member extends out of the opening as shown in figure 1. In figure 1 the display 1 is provided with eight tactile members such that a braille cell for forming a braille character is obtained.

The relief display 1 is further provided with two rigid outside sidewalls 10a, 10b. Upper wall portions 12a and 12b are integrally formed with the sidewalls 10a, 10b.

Furthermore, in this embodiment the frame 2 is provided with a central baffle 14 which in the drawing is directed in a vertical direction. It further comprises a plurality of supporting baffles 16 attached to the central baffle 14 wherein the supporting baffle 16 extend in the drawings in a horizontal direction. The supporting baffles 16 are for supporting supporting members 18 yet to be discussed.

The display is further provided with a plurality of oblong piezoelectric flexion members 20.1-20.8. Each flexion member may bend in a bending plane. In this example each bending plane extends in a direction parallel to the central baffle 14.

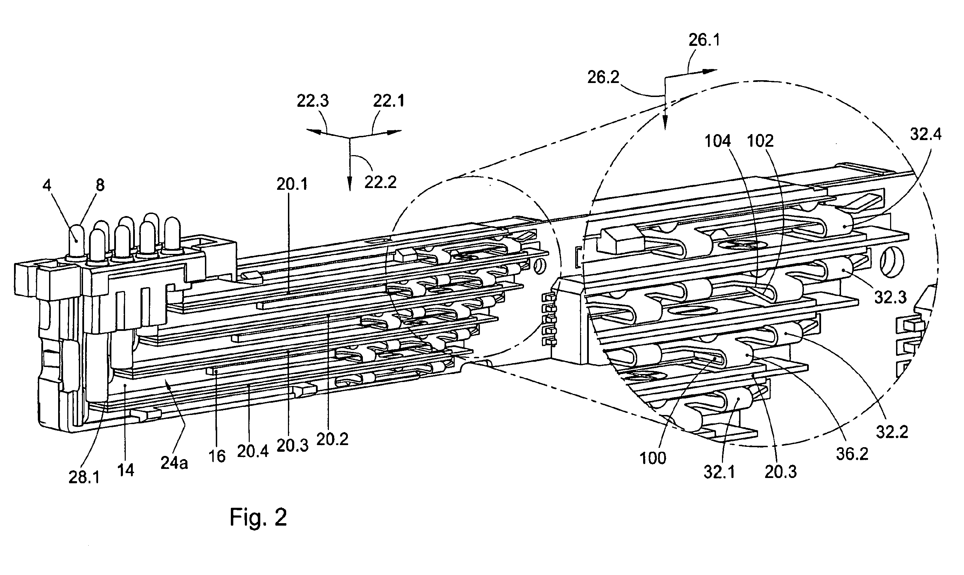

In this example the display comprises a first set of flexion members which, in the example, each have the same length wherein the flexion members of the first set are mounted to the frame in a stepped pattern one above the other in a common bonding plane 22 which is indicated in figure 2 by arrows 22.1 and 22.2. As shown in figure 2 the flexion members 20.1-20.4 form a first set of flexion members. The flexion members of the first set are stacked one above the other in a direction of the arrow 22.2. Furthermore the flexion members 20.1-20.4 of the first set are mounted to the frame in a stepped pattern. Indeed as can be seen in figure 2 the stepped pattern extends in a direction of the arrow 22.1 and arrow 22.2. The flexion members of the first set are each positioned on one side 24a of the central baffle. On a second side 24b of the central baffle wherein the first and second side 24a, 24b lay on different sides of the central baffle 14, a second set of flexion members 20.5-20.8 is attached to the frame in a similar manner as discussed above for the flexion members of the first set.

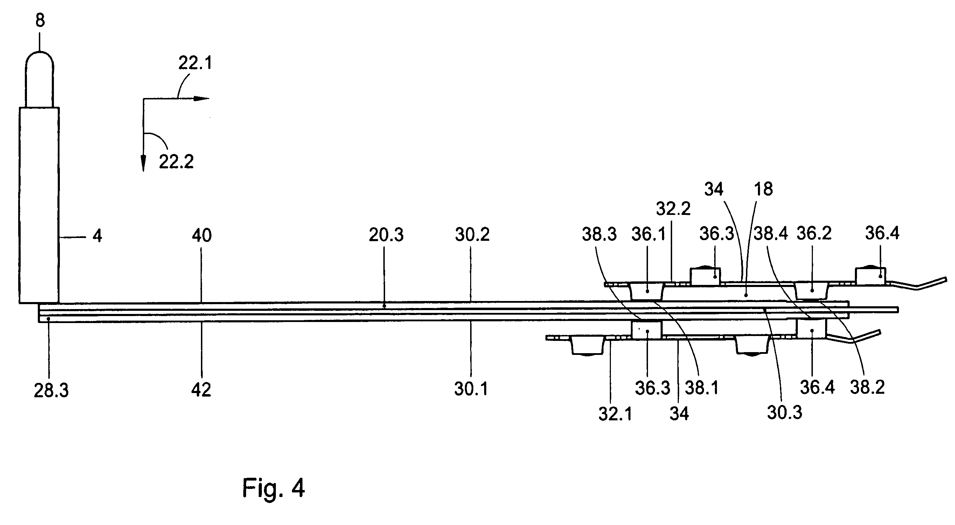

Hence, it also holds for the second set of flexion members that they have in this example the same length wherein the flexion members of the second set are mounted to the frame in a stepped pattern one above the other in a common bending plane 26 which is denoted in figure 2 by arrows 26.1 and 26.2. The bending plane 26 extends parallel to the bending plane 22. Furthermore, the central baffle 14 is sandwiched between the bending planes 22 and 26. In this example this baffle 14 prevents electrical and/or mechanical contact between flexion members laying on opposite sites of the baffle 14 respectively. It also holds that the flexion members of the second set are stacked one above the other in a direction of the arrow 26.2 and the arrow 26.1. Each flexion member comprises a contact location 28.1-28.$ which is coupled to one of the tactile members for moving the tactile member between the first and second position by bending or flexing back the flexion member. This is shown in figure 4 wherein the contact location of flexion member 20.3 is close to a free end of the flexion member 20.3. By bending the flexion member 20.3 while it is fixed to the frame by means of supporting means 18, yet to be discussed, wherein the bending takes place in the bending plane 22, the tactile member 4 can move in a direction of the arrow 22.1. The bending of the piezoelectric flexion member can take place under the influence of voltages supplied thereto and subsequently deflect back if the voltages are removed. This process is accelerated if (temporarily) voltages with and inverted polarity are applied to the flexion member. In that case the absolute value of the inverted voltages may be but need not be the same as the absolute value of the non-inverted voltages. The inverted voltages may be removed if the flexion member has reached its neutral position. If the inverted voltages are not removed the flexion member will continue bending passing its neutral position in a direction opposite to the direction of the arrow 22.1.

In this example each flexion member is at least provided with two layers, in this example, outer layers from piezoelectric ceramic material. These layers are denoted by reference numbers 30.1 and 30.2 in figure 4. Furthermore, each flexion member comprises a conductive central layer 30.3 wherein the conductive central layer 30.3 is attached to and sandwiched between the two layers of piezoelectric ceramic material 30.1 and 30.2. In the example a voltage of for example -240 V is applied to the layer 30.1 whereas a voltage of +240 V is supplied to the layer 30.2. If subsequently a voltage of +240 V is supplied to the conductive layer 30.3, the flexion member will bend such that its contact location 28 will move upwards whereas if a voltage of - 240 V is supplied to the central layer 30.3, the flexion member 20.2 will bend such that its contact location 28.3 will move downwards.

In this example the tactile member 4 is in its first position if the flexion member is bent such that its contact location is moved downwards wherein the tactile member 4 is in its second position if the flexion member is bent such that its contact location 28 is moved upwards. Hence, in this example, the first and second location of the tactile members are determined by the flexion members when they are in a bent condition. If a flexion member is flexed back to a neutral position (which happens in case there is not applied a voltage to the layer 30.3) then the corresponding tactile member is in a position somewhere between the first and second position. Of course this is not essential. In an alternative embodiment the relaxed condition of a flexion member could for example correspond with the first position of the corresponding tactile member whereas a bent condition of a flexion member could correspond to the second position of the tactile member. This set-up may be a so called unimorph.

The relief display is further provided with supporting means for supporting each of said flexion members on said frame at two opposite sides of the flexion member.

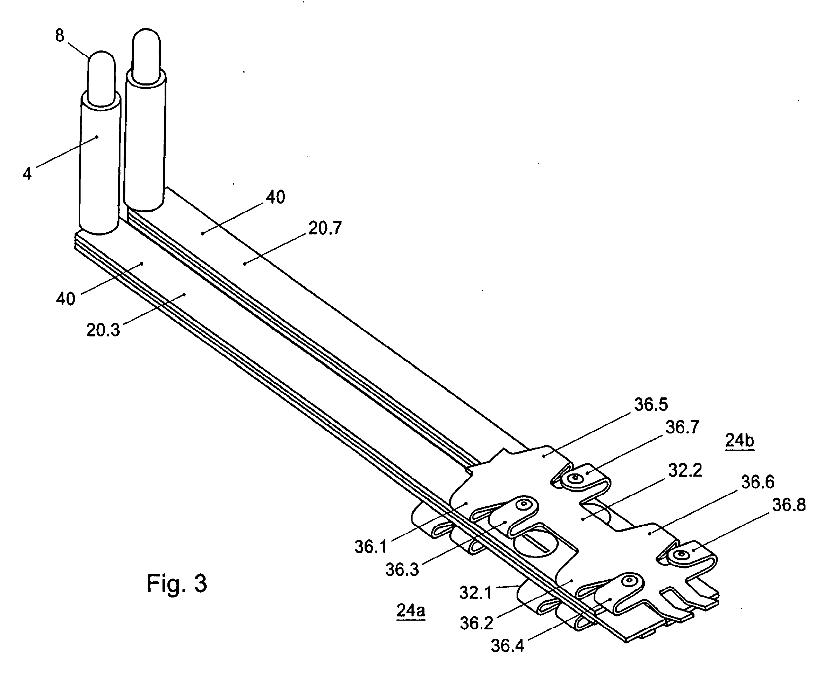

The supporting means for supporting, for example, the flexion members 20.3 and 20.7 comprises a multi spring clip 32.1 and a multi spring clip 32.2 respectively. See for example figures 2, 3 and 4. Clip 32.2 is provided with a central body portion 34 extending in the longitudinal direction of the flexion members.

Furthermore, clip 32.2 comprises on a first side 24a of the central body portion 34 two U-shaped leaf springs 36.1 and 36.2, which are bent nearwardly. Furthermore it comprises on the same side two U-shaped leaf springs 36.3 and 36.4 which are bent upwardly. Furthermore it comprises on the other side 24b of its central body portion 34 two leaf springs 36.5 and 36.6 which are bent nearwardly. Finally it comprises on the side 24b of the central body portion 34 two leaf springs 36.7 and 36.8 which are bent upwardly. Clip 32.2 has the same shape as clip 32.1 and therefore also comprises eight U-shaped leaf springs. The clips 32.1 and 32.2 are in this example manufactured from a metal. Furthermore, the central body portion and the leaf springs of each clip form a one-piece integrated whole. As can be seen in figure 2, the clips 32.1 and 32.2 are inserted in a opening in the central baffle 14 while it is further supported by means of the supporting baffles 16. The result is that for example flexion member 20.3 is clamped in its desired position and direction by means of the clips 32.1 and 32.2. More particularly, the flexion member 20.3 is clamped between the U-shaped leaf springs 36.1 and 36.2 of clip 32 and the U-shaped leaf springs 36.3 and 36.4 of clip 32.2. U-shaped leaf spring 36.1 of clip 32.2 forms in this example a first supporting member for supporting the flexion member 20.3 on a first location 38.1 laying on a first side 40 of the flexion member. Furthermore, the U-shaped leaf spring 36.2 of clip 32.2 forms a second supporting member for supporting the flexion member 20.3 on a second location 38.2 at the first side 40 of the flexion member 20.3. Furthermore, the U-shaped leaf spring 36.3 of clip 32.1 forms a third supporting member for supporting the flexion member 20.3 on a third location 38.3 at a second side 42 of the two opposite sides 42 of the flexion member 20.3. The first location and the second location are separate from each other. In this example each of the supporting members comprise a spring means for pushing the supporting members against the flexion members so that the flexion member is clamped in by means of the supporting members. Furthermore it holds that the contact location 28.3 of the flexion member is separate from the first, third and second location respectively.

The U-shaped leaf spring 36.4 of the clip 32.1 forms a fourth supporting member for supporting the flexion member 20.3 at a fourth location 38.4 on the second side 42 wherein said fourth location is separate from the third location 38.3.. It further follows that with reference to the flexion member 20.3 the first supporting member 36.1 and the third supporting member 36.3 lay opposite each other on opposite sides 40,42 of the flexion member and that the second supporting member 36.2 and a fourth supporting member 36.4 lay opposite each other on opposite sides 40,42 of the flexion member wherein each of the supporting members comprise a spring means for clamping the flexion member between the first and third supporting member and between the second and fourth supporting member respectively.

The flexion member 20.7 which lays on the other side 24b of the central baffle 14 is clamped in by means of the clips 32.1 and 32.2 in a same manner as discussed above for flexion member 20.3. Hence, U-shaped leaf springs 36.5 and 36.6 of clip 32.2 and U-shaped leaf springs 36.7 and 36.8 of clip 32.1 each form a supporting member, more particular four supporting members, for clamping the flexion member 20.7 between each of said supporting members.

It is furthermore noted that the U- shaped leaf springs 36.3 and 36.4 from clip 32.2 form supporting members each comprising a spring means for supporting the flexion member 20.2 laying above the flexion member 20.3. Similarly the U-shaped leaf springs 36.7 and 36.8 of clip 32.1 form supporting members each comprising a spring means for supporting the flexion member 20.6 laying above flexion member 20.7. Hence, in this example clip 32.2 is used to support the four flexion members 20.2, 20.2, 20.6 and 20:7 respectively. The clips 32.1, 32.2 and 32.3 are stacked relative to each other according to the same patterns as to which the corresponding flexion members are stacked.

In other words, the supporting members corresponding to the first set are located relative to the frame per flexion member in the same pattern as the flexion members of the first set are located relative t the frame.

It is noted that the upper multi spring clip 32.4 only comprises four nearwardly bended leaf springs. Furthermore the lower clip 32.1 only comprises four upwardly bended leaf springs.

In view of the above it further holds that the first set comprises pairs of first and second flexion members (20.1, 20.2; 20.2, 20.3; 20.3, 20.4) laying adjacent to and separate from each other in the bending plane 22 wherein a first and second supporting member 36.1 and 36.2 supporting the first side 40 of the first flexion member 20.3 and a third and fourth supporting member 36.3 and 36.4 supporting the second side 42 of the second flexion member 20.2 are part of a single clip 32.2.

It also follows from the above that the supporting members corresponding to the second set are located relative to the frame per flexion member in the same pattern as the flexion members of the second set are located relative to the frame. It further holds that the second set comprises pairs of first and second flexion members (for example 20.6 and 20.7) laying separate and adjacent to each other in the bending plane 26 wherein a first and second supporting member 36.5 and 36.6 supporting a first side 40 of the flexion member 20.7 of the second set and a third and fourth supporting member 36.7 and 36.8 supporting the second side 42 of the second flexion member 20.6 of the second set are part of a single clip 32.2. It further holds that the bending planes 22 and 26 of the first and second set extend parallel to each other wherein a position of the flexion members of the first set and the position of the flexion members of the second set are shifted relative to each other in a direction perpendicular to the bending planes. In this example this direction is denoted by arrow 22.3 in figure 2.

It further holds that a first and second supporting member 36.1 and 36.2 which support a third side 40 of a first flexion member 20.3 of the first set and a first and second supporting member 36.5 and 36.6 which support a first side 40 of a first flexion member 20.7 of the second set form part of the single clip 32.2 wherein said flexion members of the first and second set are shifted relative to each other in a direction perpendicular to one of the bending planes.

Similarly it holds that a third and fourth supporting member 36.3 and 36.4 which support the second side 42 of a first flexion member 20.3 of the first set and a third and fourth supporting member 36.7 and 36.8 supporting a second side 42 of a first flexion member 20.7 of the second set form part of a single clip 32.1 wherein said first flexion members of the first and second set are shifted relative to each other in a direction perpendicular to one of the bending planes 22, 26.

It even holds in this example that the first flexion member 20.3 of the first set and a first flexion member 20.7 of the second set are shifted relative to each other in a direction perpendicular to one of the bending planes and that the second flexion member 20.2 of the first set and a second flexion member 20.6 of the second set are shifted relative to each other in a direction perpendicular to one of the bending planes wherein a first and second supporting member 36.1 and 36.2 supporting the first side 40 of the first flexion member 20.3, a third and fourth supporting member 36.3 and 36.4 supporting the second side 42 of the second flexion member 20.2 of the first set, a first and second supporting member 36.5 and 36.6 supporting the first side 40 of the first flexion member 20.7 of the second set and a third and fourth supporting member 36.7 and 36.8 supporting the second side 42 of the second flexion member 20.6 of the second set are part of a single clip 32.2.

The same properties as discussed above for clips 32.1 and 32.2 apply to similar clips.

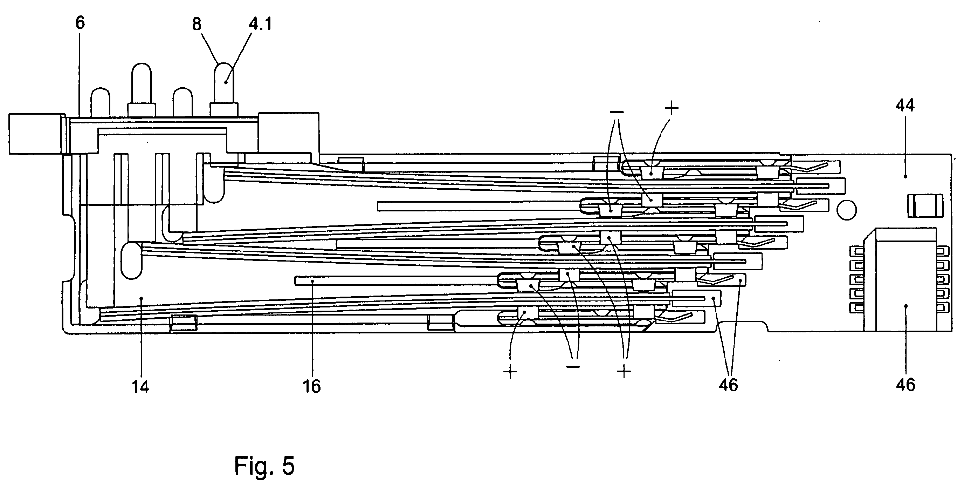

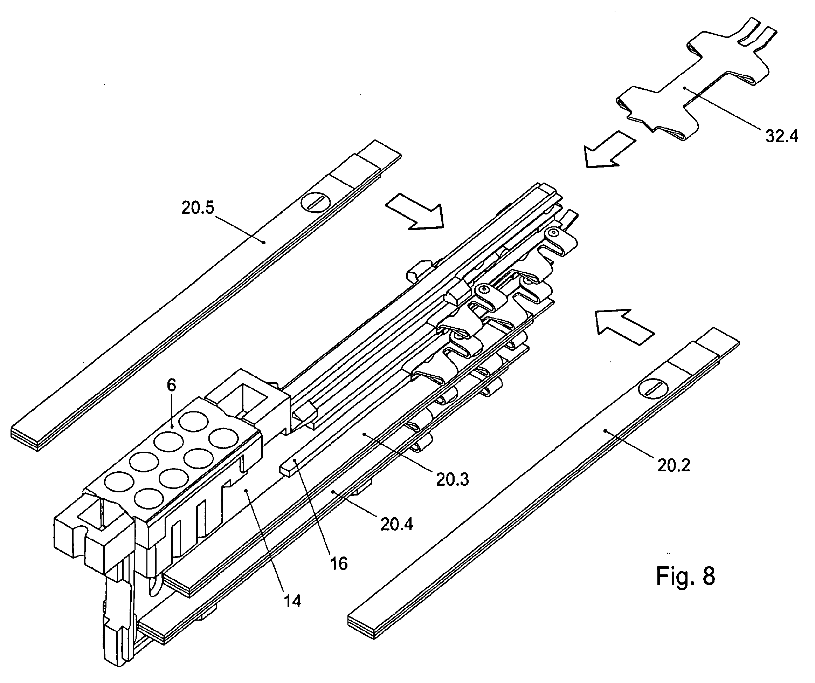

Because of the use of the supporting members comprising a spring means, the flexion members are automatically aligned. As shown in figure 8 the clips 32 can be inserted into openings in the central baffle from behind the central baffle. After that the flexion members can be inserted between the U-shaped leaf springs of the clips sideways from the central baffle. After insertion of the flexion members their supporting locations 28 are automatically aligned and it is not necessary to manually adjust the direction of the flexion members. As shown in figure 5, flexion member 20.1 is bent upwards for moving tactile member 4.1 in its second position. Furthermore flexion member 40.2 is bent downwards for moving the tactile member 40.2 in its first position.

In this example the display is further provided with a PCB 44 comprising electronic circuitry for applying a desired voltage to the outer layer and inner layers of each of the flexion members. As shown in figure 5 the central layers 13.3 are directly conductively connected to voltage supply lines 46 without any intermediate leads or wires. Such wires can be omitted because they are not needed for adjusting the direction of the flexion members as discussed above.

According to another aspect of the invention, the layers of piezoelectric ceramic material of two adjacent flexion members of the first set which face each other, such as for example layer 30.2 of flexion member 20.3 and layer 30.1 of flexion member 20.2, are conductively connected to a common voltage supply line wherein the layers of piezoelectric ceramic material of each flexion member 20 of the first set are connected to different voltage supply lines. In this example, the layers 30.2 of flexion member 20.1 and 20.3 as well as the layers 30.1 of the flexion members 20.2 and 20.4 are applied to a positive voltage of 240 V. Furthermore the layers 30.1 of flexion members 20.1 and 20.3 and the layers 30.2 of flexion members 20.2 and 20.4 are applied to a negative voltage of -240 V. The same applies mutatis mutandis to the flexion members 20.5-20.8 of the second set. Hence, the layers 30.2 of the flexion members 20.5 and 20.7 of the second set as well as the layers 30.1 of the flexion members 20.6 and 20.8 of the second set are connected to a common voltage of +240 V. Furthermore, the layers 30.1 of the flexion members 20.5 and 20.7 as well as the layers 30.2 of the flexion members 20.6 and 20.8 of the second set are connected to a common voltage of-240 V. Because in the examples, for example the clip 32.3, is made from a current conducting material it can be easily realized that for example layers 30.2 of the flexion members 20.3 and 20.7 and the layers 30.1 of the flexion members 20.2 and 20.6 are conductively connected and can thereby be easily conductively connected to a common voltage. The same applies mutatis mutandis to the other layers and clips,

In this example each of the clips are connected to one of two power supply lines of the PCB wherein a first power supply line provides + 240 V and another power supply line provides - 240 V. Furthermore each of the inner layers 30.3 of the flexion members are individually connected to an individual voltage control supply line of the PCB so as to individually control each flexion member as discussed above.

After that the clips, tactile members, flexion members and PCB's are brought into their desired position as discussed above, the rigid side walls 12a, 12b can be applied to close the display.

The present invention is not limited to the above referred to examples.

According to a further preferred embodiment, the bend leaf springs 36.1, 36.2, 36.5 and 36.6 are fixed for obtaining a fixed first and second supporting member for the flexion member 20.3 and for obtaining a fixed first and second supporting member for the flexion member 20.7. The same applies to each of the other nearwardly bent leaf springs. Fixation of the leaf springs may be obtained by insertion of some materials 100 inside a leaf spring, see for example spring clip 36.2 in figure 2. The material 100 is in this example a horizontal rigid plate 100 which extends from and is fixed to the central baffle. The horizontal plate 100 and the central baffle may be integrated in one piece. Fixation of the leaf springs may also be obtained by bending the leaf springs so that a free end 102 of the leaf spring rests against an above laying portion 104 of the leaf spring (see again figure 2, wherein said free end 102 and portion 104 are indicated for one leaf spring). In that case the upwardly bend leaf springs such as leaf springs 36.3, 36.4, 36.7 and 36.8 are not fixed nearwardly. In this embodiment it holds that one of the first and third supporting members comprises opening means for damping the flexion member between the first and third supporting member wherein another of the first and third supporting members is fixed and that one of the second and fourth supporting members comprises spring means for damping the flexion member between the second and fourth supporting member wherein another of the second and fourth supporting member is fixed. It further holds that each of the first and second supporting member comprises the spring means and each of the third and fourth supporting member is fixed or that each of the third and fourth supporting member comprises the spring means and each of the first and second supporting member is fixed. Furthermore it holds that the fixed supporting members are obtained by U-shaped leaf springs which are fixed.

Alternatively it is also possible to fix the upwardly bend leaf springs such as leaf springs 36.3, 36.4, 36.7, 36.8 for obtaining fixed third and fourth supporting members in a similar manner as discussed above for the nearwardly bend leaf springs. In that case the nearwardly bend leaf springs are not fixed.

In the above referred to examples the flexion member is a bimorph. Also other types of flexion members are possible such as a single morph or flexion members comprising a conductive central leaf, a piezoelectric layer on both sides of the central leafs and a conductive coating on these layers. The steady state voltages are then applied to the coatings in a similar manner as discussed above for the ceramic layers whereas the control voltages are applied to the central leaf in a similar way as discussed for the central layer 30.3. The spring means may also comprise other type of spring means than leaf springs such as coil springs, resilient members such as rubber members etc.

Furthermore, the invention is not limited to a display in the form of a braille cell. The invention is not limited to the application for forming braille characters but encompasses also devices for communicating arbitrary patterns to blind or visually handicapped persons. Such modifications all fall within the scope of the pending claims.

## Claims

1. An electromechanical relief display device comprising:
a frame;
at least one tactile member provided in said frame which is movable between at least a first position and a second position such that by feeling for said tactile member a user determines in which position said tactile member is;
an oblong piezoelectric flexion member which may be bent (in a bending plane) under the influence of voltages applied thereto and subsequently flex back if these voltages are removed or if voltages with and inverted polarity are applied thereto; and
supporting means for supporting said flexion member on said frame at two opposite sides of the flexion member wherein the flexion member comprises a contact-location which is coupled to the tactile member for moving the tactile member between the first and second position by bending or flexing back the flexion member, **characterised in that** the flexion member is a bimorph flexion member wherein the supporting means comprises at least a first and second supporting member for supporting the flexion member on at least a first and second location at a first side of the two opposite sides of the flexion member respectively and at least a third supporting member for supporting the flexion member on at least a third location at a second side of the two opposite sides of the flexion member wherein the first location and the second location are separate from each other and wherein at least one of the supporting members comprises spring means for pushing this supporting member against the flexion member so that the flexion member is clamped in between the supporting members and wherein the contact-location of the flexion member is separated from the first, third and second location.

2. A display according to claim 1, **characterised in that** the supporting means comprises a fourth supporting member for supporting the flexion member at a fourth location on the second side separate from the third location.

3. A display according to claim 2, **characterised in that** the first supporting member and the third supporting member lay opposite each other on the opposite sides of the flexion member and that the second supporting member and the fourth supporting member lay opposite each other on the opposite sides of the flexion member wherein at least one of the first and third supporting member comprises spring means for clamping the flexion between the first and third supporting member.

4. A display according to claim 3 **characterised in that** at least one of the second and fourth supporting member comprises spring means for clamping the flexion between the second and fourth supporting member.

5. A display according to claim 3 or 4, **characterised in that** each of the first and third supporting member comprises spring means for clamping the flexion between the first and third supporting member.

6. A display according to claim 3, 4 or 5, **characterised in that** each of the second and fourth supporting member comprises spring means for clamping the flexion between the first and third supporting member.

7. A display according to any preceding claim, **characterised in that** if the flexion member is bended by applying said voltages it bends in a bending plane perpendicular to the opposite sides of the flexion member.

8. A display according to claim 4, **characterized in that** one of the first and third supporting members comprises opening means for clamping the flexion member between the first and third supporting member wherein another of the first and third supporting members is fixed and that one of the second and fourth supporting members comprises spring means for clamping the flexion member between the second and fourth supporting member wherein another of the second and fourth supporting member is fixed.

9. A display according to claim 8, **characterized in that** each of the first and second supporting member comprises the spring means and each of the third and fourth supporting member is fixed or that each of the third and fourth supporting member comprises the spring means and each of the first and second supporting member is fixed.

10. A display according to any preceding claim, **characterised in that** each of the spring means pushes against one of the opposite sides of the flexion member in or opposite a direction wherein the flexion bends (or in a direction laying in a bending plane wherein the flexion bends) under influence of the voltages.

11. A display according to any preceding claim, **characterised in that** it comprises a plurality of tactile members and a corresponding plurality of the flexion members wherein each tactile member is moved by one of the flexion members and wherein each of the flexion members are supported on said frame by the supporting means.

12. A display according to claim 11, **characterised in that** wherein each of the flexion members are supported on said frame by the supporting means in a mutual similar manner.

13. A display according to claim 11 or 12, **characterised in that** the display comprises a first set of flexion members (preferably having the same length) wherein the flexion members of the first set are mounted to the frame (preferably in a stepped pattern) one above the other in a common bending plane.

14. A display according to claim 13, **characterised in that** the flexion members of the first set have the same length wherein the flexion members of the first set are mounted to the frame in a stepped pattern one above the other in the common bending plane.

15. A display according to claim 12 and according to claim 13 or 14, **characterised in that** the supporting members corresponding to the first set are located relative to the frame per flexion member in the same pattern as the flexion members of the first set are located relative to the frame.

16. A display according to claims 2 and 15, **characterised in that** the first set comprises pairs of first and second flexion members laying adjacent and separated to each other in the bending plane wherein a first and second supporting member supporting the first side of the first flexion member and a third and fourth supporting member supporting the second side of the second flexion member are part of a single clip.

17. A display according to any preceding claim 13-16, **characterised in that** that the display comprises a second set of flexion members (preferably having the same length) wherein the flexion members of the second set are mounted to the frame (preferably in a stepped pattern) one above the other in a common bending plane.

18. A display according to claim 17, **characterised in that** the flexion members of the second set have the same length wherein the flexion members of the second set are mounted to the frame in a stepped pattern one above the other in the common bending plane.

19. A display according to claim 12 and according to claim 17 or 18, **characterised in that** the supporting members corresponding to the second set are located relative to the frame per flexion member in the same pattern as the flexion members of the second set are located relative to the frame.

20. A display according to claims 2 and 19, **characterised in that** the second set comprises pairs of first and second flexion members laying separated and adjacent to each other in the bending plane wherein a first and second supporting member supporting the first side of the first flexion member of the second set and a third and fourth supporting member supporting the second side of the second flexion member of the second set are part of a single clip.

21. A display according to claims 13 and 17, **characterised in that** the bending planes of the first and second set extend parallel to each other wherein the positions of the flexion members of the first set and the positions of the flexion members of the second set are shifted relative to each other in a direction perpendicular to the bending planes.

22. A display according to claim 21, **characterised in that** a first and second supporting member which support a first side of a first flexion member of the first set and a first an second supporting member which support a first site of a first flexion member of the second set form part of a single clip wherein said first flexion members of the first and second set are shifted relative to each other in a direction perpendicular to one of the bending planes.

23. A display according to claim 21 or 22, **characterised in that** a third and fourth supporting member which support a second side of a first flexion member of the first set and a third and fourth supporting member supporting a second side of a first flexion member of the second set form part of a single clip wherein said first flexion members of the first and second set are shifted relative to each other in a direction perpendicular to one of the bending planes.

24. A display according to claims 16, 20 and 21, **characterised in that** the first flexion member of the first set and the first flexion member of the second set are shifted relative to each other in a direction perpendicular to one of the bending planes and the second flexion member of the first set and the second flexion member of the second set are shifted relative to each other in a direction perpendicular to one of the bending planes wherein a first and second supporting member supporting the first side of the first flexion member of the first set, a third and fourth supporting member supporting the second side of the second flexion member of the first set, a first and second supporting member supporting the first side of the first flexion member of the second set and a third and fourth supporting member supporting the second side of the second flexion member of the second set are part of a single clip.

25. A display according to claims 13 and 17, **characterised in that** the frame comprises central baffle extending between the first and second set of flexion members.

26. A display according to any preceding claim, **characterised in that** the frame comprised a plurality of support baffles supporting the supporting members wherein the supporting members are located between a support baffle and a flexion member.

27. A display according to claims 25 and 26, **characterised in that** the central baffle and the supporting baffle are integrated in a single part.

28. A display according to any preceding claim wherein the frame is manufactured from a non-conductive material such as plastic.

29. A display according to any preceding claim wherein the supporting means are manufactured from a conductive material.

30. A display according to any preceding claim, **characterised in that**, said flexion members each are at least provided with two layers of piezoelectric ceramic material and a conductive central layer wherein the conductive central layer is attached to and sandwiched between the two layers of piezoelectric ceramic material.

31. A display according to claims 13 and 30, **characterised in that**, the layers of piezoelectric ceramic material of two adjacent flexion members of the first set which face each other are conductively connected to a common voltage supply line and that layers of piezoelectric ceramic material of each flexion member of the first set are connected to different voltage supply lines.

32. A display according to claim 31, **characterised in that** the central conductive layer of each flexion member of the first set is connected to an individual voltage control supply line.

33. A display according to claims 17 and 30, **characterised in that**, layers of piezoelectric ceramic material of two adjacent flexion members of the second set which face each other are conductively connected to a common voltage supply line and that layers of piezoelectric ceramic material of each flexion member of the second set are connected to different voltage supply lines.

34. A display according to claim 33, **characterised in that** the central conductive layer of each flexion member of the second set is connected to an individual voltage control supply line.

35. A display according to claims 31-34, **characterised in that** layers of piezoelectric ceramic material of two adjacent flexion members of the first set and the second set respectively and which face each other are conductively connected to a common voltage supply line and that layers of piezoelectric ceramic material of each flexion, member of the first set and the second set are connected to different voltage supply lines.

36. A display according to claim 30, **characterised in that** the display is further provided with a PCB comprising a electronic circuit for supplying voltages to the layers of piezoelectric ceramic material of the flexion members wherein the central conductive layer is directly conductively connected to a voltage supply line of the PCB without intermediate electric leads or wires.

37. A display according to any preceding claim, **characterised in that** the display is provided with rigid outer walls extending parallel to a bending plane or a bending direction of the at least one flexion member wherein the at least one flexion member may bend.

38. A display according to claim 16, 20, 22 or 24, **characterised in that** the clip is made form a conductive material such as metal.

39. A display according to any preceding claim, **characterised in that** at least one of the spring means comprises a leaf spring.

40. A display according to claim 16, 20, 22, 24 or 38, **characterised in that** each clip comprises a central body portion and a plurality of U-shaped leaf springs attached to the central body portion wherein each U-shaped leaf spring forms a supporting member including a spring means.

41. A display according to claim 40, **characterised in that** the central body portion and the leaf springs of a clip form a one-piece integrated whole.

42. A display according to claim 8 or 9 and according to claim 40 or 41, **characterized in that** the fixed supporting members are obtained by U-shaped leaf springs which are fixed.

## Patentansprüche

1. Elektromechanische Reliefanzeige, umfassend:
einen Rahmen,
mindestens ein in dem Rahmen bereitgestelltes Tastglied, das zwischen mindestens einer ersten Position und einer zweiten Position beweglich ist, sodass ein Benutzer durch Fühlen nach dem Tastglied bestimmt, in welcher Position das Tastglied ist;
ein längliches, piezoelektrisches Biegeglied, das unter dem Einfluss von darauf ausgeübten Spannungen gebogen werden kann (in einer Biegeebene) und das sich anschließend zurückbiegt, wenn diese Spannungen entfernt werden oder wenn Spannungen mit einer umgekehrten Polarität darauf angewendet werden; und
Stützmittel zum Stützen des Biegeglieds auf dem Rahmen an zwei gegenüberliegenden Seiten des Biegeglieds, wobei das Biegeglied eine Kontaktstelle umfasst, die mit dem Tastglied gekoppelt ist, um das Tastglied durch Biegen oder Zurückbiegen des Biegeglieds zwischen der ersten und der zweiten Position zu bewegen, **dadurch gekennzeichnet, dass** das Biegeglied ein bimorphes Biegeglied ist, wobei das Stützmittel mindestens ein erstes und zweites Stützglied zum Stützen des Biegeglieds an mindestens einer ersten und zweiten Stelle auf einer ersten Seite der zwei gegenüberliegenden Seiten des Biegeglieds und mindestens ein drittes Stützglied zum Stützen des Biegeglieds an mindestens einer dritten Stelle auf einer zweiten Seite der zwei gegenüberliegenden Seiten des Biegeglieds umfasst, wobei die erste Stelle und die zweite Stelle voneinander getrennt sind und wobei mindestens eines der Stützmittel Federmittel umfasst, um dieses Stützglied gegen das Biegeglied zu drücken, sodass das Biegeglied zwischen den Stützgliedern eingeklemmt ist und wobei die Kontaktstelle des Biegeglieds von der ersten, dritten und zweiten Stelle getrennt ist.

2. Anzeige nach Anspruch 1, **dadurch gekennzeichnet, dass** das Stützmittel ein viertes Stützglied zum Stützen des Biegeglieds an einer vierten Stelle auf der zweiten Seite, getrennt von der dritten Stelle, umfasst.

3. Anzeige nach Anspruch 2, **dadurch gekennzeichnet, dass** das erste Stützglied und das dritte Stützglied einander gegenüber auf den gegenüberliegenden Seiten des Biegeglieds liegen und dass das zweite Stützglied und das vierte Stützglied einander gegenüber auf den gegenüberliegenden Seiten des Biegeglieds liegen, wobei mindestens das erste und das dritte Stützglied Federmittel umfasst, um die Biegung zwischen dem ersten und dritten Stützglied festzuklemmen.

4. Anzeige nach Anspruch 3, **dadurch gekennzeichnet, dass** mindestens das zweite und das vierte Stützglied Federmittel umfasst, um die Biegung zwischen dem zweiten und vierten Stützglied festzuklemmen.

5. Anzeige nach Anspruch 3 oder 4, **dadurch gekennzeichnet, dass** jedes des ersten und dritten Stützglieds Federmittel umfasst, um die Biegung zwischen dem ersten und dritten Stützglied festzuklemmen.

6. Anzeige nach Anspruch 3, 4 oder 5, **dadurch gekennzeichnet, dass** jedes des zweiten und vierten Stützglieds Federmittel umfasst, um die Biegung zwischen dem ersten und dritten Stützglied festzuklemmen.

7. Anzeige nach einem der vorhergehenden Ansprüche, **dadurch gekennzeichnet, dass**, wenn das Biegeglied durch Anwenden der Spannung gebogen wird, es sich in einer Biegeebene senkrecht zu den gegenüberliegenden Seiten des Biegeglieds biegt.

8. Anzeige nach Anspruch 4, **dadurch gekennzeichnet, dass** eines der ersten und dritten Stützglieder Öffnungsmittel umfasst, um das Biegeglied zwischen dem ersten und dritten Stützglied zu dämpfen, wobei ein anderes der ersten und dritten Stützglieder fixiert ist und dass eines der zweiten und vierten Stützglieder Federmittel umfasst, um das Biegeglied zwischen dem zweiten und vierten Stützglied zu dämpfen, wobei ein anderes des zweiten und vierten Stützglieds fixiert ist.

9. Anzeige nach Anspruch 8, **dadurch gekennzeichnet, dass** jedes erste und zweite Stützglied Federmittel umfasst und jedes dritte und vierte Stützglied fixiert ist oder dass jedes dritte und vierte Stützglied Federmittel umfasst und jedes erste und zweite Stützglied fixiert ist.

10. Anzeige nach einem der vorhergehenden Ansprüche, **dadurch gekennzeichnet, dass** jedes Federmittel gegen eine der gegenüberliegenden Seiten des Bindeglieds in oder entgegen einer Richtung drückt, wobei unter dem Einfluss der Spannungen eine Biegung entsteht (oder in einer Richtung, die in einer Biegeebene liegt, wobei die Biegung entsteht).

11. Anzeige nach einem der vorhergehenden Ansprüche, **dadurch gekennzeichnet, dass** sie eine Vielzahl von Tastgliedern und eine entsprechende Vielzahl der Biegeglieder umfasst, wobei jedes Tastglied durch eines der Biegeglieder bewegt wird und wobei jedes der Biegeglieder durch die Stützmittel auf dem Rahmen gestützt wird.

12. Anzeige nach Anspruch 11, **dadurch gekennzeichnet, dass** jedes der Biegeglieder durch die Stützmittel wechselseitig in ähnlicher Weise auf dem Rahmen gestützt wird.

13. Anzeige nach Anspruch 11 oder 12, **dadurch gekennzeichnet, dass** die Anzeige einen ersten Satz von Biegegliedern (vorzugsweise von gleicher Länge) umfasst, wobei die Biegeglieder des ersten Satzes übereinander in einer gemeinsamen Biegeebene (vorzugsweise in einem Stufenmuster) am Rahmen montiert sind.

14. Anzeige nach Anspruch 13, **dadurch gekennzeichnet, dass** die Biegeglieder des ersten Satzes gleich lang sind, wobei die Biegeglieder des ersten und zweiten Satzes in einem Stufenmuster übereinander in der gemeinsamen Biegeebene an dem Rahmen montiert sind.

15. Anzeige nach Anspruch 12 und nach Anspruch 13 oder 14, **dadurch gekennzeichnet, dass** die Stützglieder, die dem ersten Satz entsprechen, in Bezug auf den Rahmen pro Biegeglied in demselben Muster angeordnet sind wie die Biegeglieder des ersten Satzes in Bezug auf den Rahmen angeordnet sind.

16. Anzeige nach den Ansprüchen 2 und 15, **dadurch gekennzeichnet, dass** der erste Satz Paare von ersten und zweiten Biegegliedern umfasst, die nebeneinander und getrennt voneinander in der Biegeebene liegen, wobei ein erstes und zweites Stützglied, welche die erste Seite des ersten Biegeglieds stützen, und ein drittes und viertes Stützglied, welche die zweite Seite des zweiten Biegeglieds stützen, Teil eines einzelnen Clips sind.

17. Anzeige nach einem der vorhergehenden Ansprüche 13-16, **dadurch gekennzeichnet, dass** die Anzeige einen zweiten Satz von Biegegliedern (vorzugsweise von gleicher Länge) umfasst, wobei die Biegeglieder des zweiten Satzes (vorzugsweise in einem Stufenmuster) übereinander in einer gemeinsamen Biegeebene an dem Rahmen montiert sind.

18. Anzeige nach Anspruch 17, **dadurch gekennzeichnet, dass** die Biegeglieder des zweiten Satzes gleich lang sind, wobei die Biegeglieder des zweiten Satzes in einem Stufenmuster übereinander in der gemeinsamen Biegeebene an dem Rahmen montiert sind.

19. Anzeige nach Anspruch 12 und nach Anspruch 17 oder 18, **dadurch gekennzeichnet, dass** die Stützglieder, die dem zweiten Satz entsprechen, in Bezug auf den Rahmen pro Biegeglied in demselben Muster angeordnet sind wie die Biegeglieder des zweiten Satzes in Bezug auf den Rahmen angeordnet sind.

20. Anzeige nach Anspruch 2 und 19, **dadurch gekennzeichnet, dass** der zweite Satz Paare von ersten und zweiten Biegegliedern umfasst, die getrennt voneinander und nebeneinander in der Biegeebene liegen, wobei ein erstes und zweites Stützglied, welche die erste Seite des ersten Biegeglieds des zweiten Satzes stützen, und ein drittes und viertes Stützglied, welche die zweite Seite des zweiten Biegeglieds des zweiten Satzes stützen, Teil eines einzelnen Clips sind.

21. Anzeige nach Anspruch 13 und 17, **dadurch gekennzeichnet, dass** die Biegeebenen des ersten und zweiten Satzes parallel zueinander verlaufen, wobei die Positionen der Biegeglieder des ersten Satzes und die Positionen der Biegeglieder des zweiten Satzes in Bezug zueinander in einer Richtung senkrecht zu den Biegeebenen verschoben sind.

22. Anzeige nach Anspruch 21, **dadurch gekennzeichnet, dass** ein erstes und zweites Stützglied, welche eine erste Seite eines ersten Biegeglieds des ersten Satzes stützen, und ein erstes und zweites Stützglied, welche eine erste Seite des ersten Biegeglieds des zweiten Satzes stützen, einen Teil eines einzelnen Clips bilden, wobei die ersten Biegeglieder des ersten und zweiten Satzes in Bezug zueinander in einer Richtung senkrecht zu einer der Biegeebenen verschoben sind.

23. Anzeige nach Anspruch 21 oder 22, **dadurch gekennzeichnet, dass** ein drittes und viertes Stützglied, welche eine zweite Seite eines ersten Biegeglieds des ersten Satzes stützen, und ein drittes und viertes Stützglied, welche eine zweite Seite eines ersten Biegeglieds des zweiten Satzes stützen, Teil eines einzelnen Clips bilden, wobei die Biegeglieder des ersten und zweiten Satzes in Bezug zueinander in einer Richtung senkrecht zu einer der Biegeebenen verschoben sind.

24. Anzeige nach den Ansprüchen 16, 20 und 21, **dadurch gekennzeichnet, dass** das erste Biegeglied des ersten Satzes und das erste Biegeglied des zweiten Satzes in Bezug zueinander in einer Richtung senkrecht zu einer der Biegeebenen verschoben sind und das zweite Biegeglied des ersten Satzes und das zweite Biegeglied des zweiten Satzes in Bezug zueinander in einer Richtung senkrecht zu einer der Biegeebenen verschoben sind, wobei ein erstes und zweites Stützglied, welche die erste Seite des ersten Biegeglieds des ersten Satzes stützen, ein drittes und viertes Stützglied, welche die zweite Seite des zweiten Biegeglieds des ersten Satzes stützen, ein erstes und zweites Stützglied, welche die erste Seite des ersten Biegeglieds des zweiten Satzes stützen, und ein drittes und viertes Stützglied, welche die zweite Seite des zweiten Biegeglieds des zweiten Satzes stützen, Teil eines einzelnen Clips sind.

25. Anzeige nach den Ansprüchen 13 und 17, **dadurch gekennzeichnet, dass** der Rahmen eine zentrale Ablenkplatte umfasst, die sich zwischen dem ersten und zweiten Satz der Biegeglieder erstreckt.

26. Anzeige nach einem der vorhergehenden Ansprüche, **dadurch gekennzeichnet, dass** der Rahmen eine Vielzahl von Stützplatten umfasst, welche die Stützglieder stützen, wobei die Stützglieder zwischen einer Stützplatte und einem Biegeglied angeordnet sind.

27. Anzeige nach den Ansprüchen 25 und 26, **dadurch gekennzeichnet, dass** die zentrale Ablenkplatte und die Stützplatte in ein einziges Teil integriert sind.

28. Anzeige nach einem der vorhergehenden Ansprüche, wobei der Rahmen aus einem nicht leitenden Material wie beispielsweise einem Kunststoff hergestellt ist.

29. Anzeige nach einem der vorhergehenden Ansprüche, wobei die Stützmittel aus einem leitenden Material hergestellt sind.

30. Anzeige nach einem der vorhergehenden Ansprüche, **dadurch gekennzeichnet, dass** die Biegeglieder jeweils mindestens mit zwei Schichten eines piezoelektrischen Keramikmaterials und einer leitenden zentralen Schicht versehen sind, wobei die leitende zentrale Schicht befestigt ist an und eingeschoben ist zwischen den zwei Schichten des piezoelektrischen Keramikmaterials.

31. Anzeige nach den Ansprüchen 13 und 30, **dadurch gekennzeichnet, dass** die Schichten des piezoelektrischen Keramikmaterials von zwei angrenzenden, einander gegenüberliegenden Biegegliedern des ersten Satzes leitend mit einer gemeinsamen Spannungsversorgungsleitung verbunden sind, und dass die Schichten des piezoelektrischen Keramikmaterials von jedem Biegeglied des ersten Satzes mit verschiedenen Spannungsversorgungsleitungen verbunden sind.

32. Anzeige nach Anspruch 31, **dadurch gekennzeichnet, dass** die zentrale leitende Schicht jedes Biegeglieds des ersten Satzes mit einer individuellen Spannungssteuerversorgungsleitung verbunden ist.

33. Anzeige nach den Ansprüchen 17 und 30, **dadurch gekennzeichnet, dass** Schichten von piezoelektrischem Keramikmaterial von zwei angrenzenden, einander gegenüber liegenden Biegegliedern des zweiten Satzes leitend mit einer gemeinsamen Spannungsversorgungsleitung verbunden sind, und dass Schichten des piezoelektrischen Keramikmaterials jedes Biegeglieds des zweiten Satzes mit verschiedenen Spannungsversorgungsleitungen verbunden sind.

34. Anzeige nach Anspruch 33, **dadurch gekennzeichnet, dass** die zentrale leitende Schicht jedes Biegeglieds des zweiten Satzes mit einer individuellen Spannungssteuerversorgungsleitung verbunden ist.

35. Anzeige nach den Ansprüchen 31-34, **dadurch gekennzeichnet, dass** Schichten von piezoelektrischem Keramikmaterial von zwei angrenzenden, einander gegenüber liegenden Biegegliedern des ersten bzw. des zweiten Satzes leitend mit einer gemeinsamen Spannungsversorgungsleitung verbunden sind, und dass die Schichten von piezoelektrischem Keramikmaterial von jedem Biegeglied des ersten Satzes und des zweiten Satzes mit verschiedenen Spannungsversorgungsleitungen verbunden sind.

36. Anzeige nach Anspruch 30, **dadurch gekennzeichnet, dass** die Anzeige ferner mit einer gedruckten Schaltung versehen ist, umfassend einen elektronischen Schaltkreis zur Versorgung der Schichten von piezoelektrischem Keramikmaterial der Biegeglieder mit Spannung, wobei die zentrale leitende Schicht direkt leitend mit einer Spannungsversorgungsleitung der gedruckten Schaltung ohne dazwischen liegende elektrische Anschlüsse oder Drähte verbunden ist.

37. Anzeige nach einem der vorhergehenden Ansprüche, **dadurch gekennzeichnet, dass** die Anzeige mit starren Außenwänden versehen ist, die sich parallel zu einer Biegeebene oder einer Biegerichtung von dem mindestens einen Biegeglied erstrecken, wobei das mindestens eine Biegeglied sich biegen kann.

38. Anzeige nach Anspruch 16, 20, 22 oder 24, **dadurch gekennzeichnet, dass** der Clip aus einem leitenden Material wie beispielsweise Metall hergestellt ist.

39. Anzeige nach einem der vorhergehenden Ansprüche, **dadurch gekennzeichnet, dass** mindestens eines der Federmittel eine Blattfeder umfasst.

40. Anzeige nach Anspruch 16, 20, 22, 24 oder 38, **dadurch gekennzeichnet, dass** jeder Clip einen zentralen Körperteil und eine Vielzahl von U-förmigen, an dem zentralen Körperteil befestigten Blattfedern umfasst, wobei jede U-förmige Blattfeder ein Stützglied einschließlich eines Federmittels bildet.

41. Anzeige nach Anspruch 40, **dadurch gekennzeichnet, dass** der zentrale Körperteil und die Blattfedern eines Clips ein einteiliges, integriertes Ganzes bilden.

42. Anzeige nach Anspruch 8 oder 9 und nach Anspruch 40 oder 41, **dadurch gekennzeichnet, dass** die fixierten Stützglieder durch U-förmige Blattfedern, die fixiert sind, erhalten werden.

## Revendications

1. Dispositif électromécanique d'affichage en relief, comprenant :
un cadre ;
au moins un élément tactile, prévu dans ledit cadre, qui peut être déplacé entre au moins une première position et une deuxième position de telle sorte que, en palpant ledit élément tactile, un utilisateur détermine dans quelle position ledit élément tactile se trouve ;
un élément de flexion piézo-électrique oblong qui peut fléchir (dans un plan de flexion) sous l'effet de tensions qui lui sont appliquées et ensuite reprendre sa forme initiale si ces tensions sont supprimées ou si des tensions de polarité inverse lui sont appliquées ; et
des moyens de support pour supporter ledit élément de flexion sur ledit cadre au niveau de deux côtés opposés de l'élément de flexion, lequel élément de flexion comprend un emplacement de contact qui est accouplé à l'élément tactile afin de déplacer l'élément tactile entre la première et la deuxième position par la flexion ou le retour de l'élément de flexion, **caractérisé en ce que** l'élément de flexion est un élément de flexion bimorphe, dans lequel les moyens de support comprennent au moins un premier et un deuxième élément de support pour supporter l'élément de flexion à au moins un premier et un deuxième emplacement sur un premier côté des deux côtés opposés de l'élément de flexion, respectivement, et au moins un troisième élément de support pour supporter l'élément de flexion à au moins un troisième emplacement sur un deuxième côté des deux côtés opposés de l'élément de flexion, dans lequel le premier emplacement et le deuxième emplacement sont séparés l'un de l'autre, dans lequel l'un au moins des éléments de support comprend un moyen à ressort pour pousser cet élément de support contre l'élément de flexion de façon que l'élément de flexion soit serré entre les éléments de support, et dans lequel l'emplacement de contact de l'élément de flexion est séparé du premier, du troisième et du deuxième emplacement.

2. Dispositif d'affichage selon la revendication 1, **caractérisé en ce que** les moyens de support comprennent un quatrième élément de support pour supporter l'élément de flexion à un quatrième emplacement sur le deuxième côté séparé du troisième emplacement.

3. Dispositif d'affichage selon la revendication 2, **caractérisé en ce que** le premier élément de support et le troisième élément de support se trouvent l'un en face de l'autre sur les côtés opposés de l'élément de flexion et **en ce que** le deuxième élément de support et le quatrième élément de support se trouvent l'un en face de l'autre sur les côtés opposés de l'élément de flexion, l'un au moins du premier et du troisième élément de support comprenant un moyen à ressort pour serrer l'élément de flexion entre le premier et le troisième élément de support.

4. Dispositif d'affichage selon la revendication 3, **caractérisé en ce que** l'un au moins du deuxième et du quatrième élément de support comprend un moyen à ressort pour serrer l'élément de flexion entre le deuxième et le quatrième élément de support.

5. Dispositif d'affichage selon la revendication 3 ou la revendication 4, **caractérisé en ce que** chacun des premier et troisième éléments de support comprend un moyen à ressort pour serrer l'élément de flexion entre le premier et le troisième élément de support.

6. Dispositif d'affichage selon la revendication 3, la revendication 4 ou la revendication 5, **caractérisé en ce que** chacun des deuxième et quatrième éléments de support comprend un moyen à ressort pour serrer l'élément de flexion entre le premier et le troisième élément de support.

7. Dispositif d'affichage selon l'une quelconque des revendications précédentes, **caractérisé en ce que** si l'élément de flexion fléchit suite à l'application desdites tensions, il fléchit dans un plan de flexion perpendiculaire aux côtés opposés de l'élément de flexion.

8. Dispositif d'affichage selon la revendication 4, **caractérisé en ce que** l'un des premier et troisième éléments de support comprend un moyen d'ouverture pour amortir l'élément de flexion entre le premier et le troisième élément de support, un autre des premier et troisième éléments de support étant fixe, et **en ce que** l'un des deuxième et quatrième éléments de support comprend un moyen à ressort pour amortir l'élément de flexion entre le deuxième et le quatrième élément de support, un autre des deuxième et quatrième éléments de support étant fixe.

9. Dispositif d'affichage selon la revendication 8, **caractérisé en ce que** chacun des premier et deuxième éléments de support comprend le moyen à ressort et chacun des troisième et quatrième éléments de support est fixe ou **en ce que** chacun des troisième et quatrième éléments de support comprend le moyen à ressort et chacun des premier et deuxième éléments de support est fixe.

10. Dispositif d'affichage selon l'une quelconque des revendications précédentes, **caractérisé en ce que** chacun des moyens à ressort pousse contre un des côtés opposés de l'élément de flexion dans ou à l'opposé d'une direction dans laquelle l'élément de flexion fléchit (ou dans une direction située dans un plan de flexion dans lequel l'élément de flexion fléchit) sous l'effet des tensions.

11. Dispositif d'affichage selon l'une quelconque des revendications précédentes, **caractérisé en ce qu'**il comprend une pluralité d'élément tactiles et une pluralité correspondante d'éléments de flexion, chaque élément tactile est déplacé par un des éléments de flexion et chacun des éléments de flexion est supporté sur ledit cadre par les moyens de support.

12. Dispositif d'affichage selon la revendication 11, **caractérisé en ce que** chacun des éléments de flexion est supporté sur ledit cadre par les moyens de support d'une manière mutuellement similaire.

13. Dispositif d'affichage selon la revendication 11 ou la revendication 12, **caractérisé en ce que** le dispositif d'affichage comprend un premier ensemble d'éléments de flexion (de préférence ayant la même longueur), les éléments de flexion du premier ensemble étant montés sur le cadre (de préférence selon un agencement étagé) les uns au-dessus des autres dans un plan de flexion commun.

14. Dispositif d'affichage selon la revendication 13, **caractérisé en ce que** les éléments de flexion du premier ensemble ont la même longueur, les éléments de flexion du premier ensemble étant montés sur le cadre selon un agencement étagé les uns au-dessus des autres dans le plan de flexion commun.

15. Dispositif d'affichage selon la revendication 12 et selon la revendication 13 ou la revendication 14, **caractérisé en ce que** les éléments de support correspondant au premier ensemble sont situés par rapport au cadre, par élément de flexion, selon le même agencement que les éléments de flexion du premier ensemble par rapport au cadre.

16. Dispositif d'affichage selon les revendications 2 et 15, **caractérisé en ce que** le premier ensemble comprend des paires de premier et deuxième éléments de flexion disposés adjacents et séparés l'un de l'autre dans le plan de flexion, un premier et un deuxième élément de support qui supportent le premier côté du premier élément de flexion et un troisième et un quatrième élément de support qui supportent le deuxième côté du deuxième élément de flexion faisant partie d'une pince unique.

17. Dispositif d'affichage selon l'une quelconque des revendications 13 à 16 précédentes, **caractérisé en ce que** le dispositif d'affichage comprend un deuxième ensemble d'éléments de flexion (de préférence ayant la même longueur), les éléments de flexion du deuxième ensemble étant montés sur le cadre (de préférence selon un agencement étagé) les uns au-dessus des autres dans un plan de flexion commun.

18. Dispositif d'affichage selon la revendication 17, **caractérisé en ce que** les éléments de flexion du deuxième ensemble ont la même longueur, les éléments de flexion du deuxième ensemble étant montés sur le cadre selon un agencement étagé les uns au-dessus des autres dans le plan de flexion commun.

19. Dispositif d'affichage selon la revendication 12 et selon la revendication 17 ou la revendication 18, **caractérisé en ce que** les éléments de support correspondant au deuxième ensemble sont situés par rapport au cadre, par élément de flexion, selon le même agencement que les éléments de flexion du deuxième ensemble par rapport au cadre.

20. Dispositif d'affichage selon les revendications 2 et 19, **caractérisé en ce que** le deuxième ensemble comprend des paires de premiers et deuxièmes éléments de flexion disposés séparément et adjacents les uns aux autres dans le plan de flexion, un premier et un deuxième élément de support qui supportent le premier côté du premier élément de flexion du deuxième ensemble et un troisième et un quatrième élément de support qui supportent le deuxième côté du deuxième élément de flexion du deuxième ensemble faisant partie d'une pince unique.

21. Dispositif d'affichage selon les revendications 13 et 17, **caractérisé en ce que** les plans de flexion des premier et deuxième ensembles s'étendent parallèlement l'un à l'autre, les positions des éléments de flexion du premier ensemble et les positions des éléments de flexion du deuxième ensemble étant décalées les unes par rapport aux autres dans une direction perpendiculaire aux plans de flexion.

22. Dispositif d'affichage selon la revendication 21, **caractérisé en ce qu'**un premier et un deuxième élément de support qui supportent un premier côté d'un premier élément de flexion du premier ensemble et un premier et un deuxième élément de support qui supportent un premier côté d'un premier élément de flexion du deuxième ensemble font partie d'une pince unique, lesdits premiers éléments de flexion des premier et deuxième ensembles étant décalés les uns par rapport aux autres dans une direction perpendiculaire à l'un des plans de flexion.

23. Dispositif d'affichage selon la revendication 21 ou la revendication 22, **caractérisé en ce qu'**un troisième et un quatrième élément de support qui supportent un deuxième côté d'un premier élément de flexion du premier ensemble et un troisième et un quatrième élément de support qui supportent un deuxième côté d'un premier élément de flexion du deuxième ensemble font partie d'une pince unique, lesdits premiers éléments de flexion des premier et deuxième ensembles étant décalés les uns par rapport aux autres dans une direction perpendiculaire à l'un des plans de flexion.

24. Dispositif d'affichage selon les revendications 16, 20 et 21, **caractérisé en ce que** le premier élément de flexion du premier ensemble et le premier élément de flexion du deuxième ensemble sont décalés l'un par rapport à l'autre dans une direction perpendiculaire à l'un des plans de flexion et le deuxième élément de flexion du premier ensemble et le deuxième élément de flexion du deuxième ensemble sont décalés les uns par rapport aux autres dans une direction perpendiculaire à l'un des plans de flexion, un premier et un deuxième élément de support qui supportent le premier côté du premier élément de flexion du premier ensemble, un troisième et un quatrième élément de support qui supportent le deuxième côté du deuxième élément de flexion du premier ensemble, un premier et un deuxième élément de support qui supportent le premier côté du premier élément de flexion du deuxième ensemble et un troisième et un quatrième élément de support qui supportent le deuxième côté du deuxième élément de flexion du deuxième ensemble faisant partie d'une pince unique.

25. Dispositif d'affichage selon les revendications 13 et 17, **caractérisé en ce que** le cadre comprend un écran central qui s'étend entre les premier et deuxième ensembles d'éléments de flexion.

26. Dispositif d'affichage selon l'une quelconque des revendications précédentes, **caractérisé en ce que** le cadre comprend une pluralité d'écrans de support qui supportent les éléments de support, les éléments de support étant situés entre un écran de support et un élément de flexion.

27. Dispositif d'affichage selon les revendications 25 et 26, **caractérisé en ce que** l'écran central et l'écran de support sont intégrés dans une pièce unique.

28. Dispositif d'affichage selon l'une quelconque des revendications précédentes, dans lequel le cadre est fabriqué à partir d'un matériau non conducteur, par exemple en matière plastique.

29. Dispositif d'affichage selon l'une quelconque des revendications précédentes dans lequel les moyens de support sont fabriqués à partir d'un matériau conducteur.

30. Dispositif d'affichage selon l'une quelconque des revendications précédentes, **caractérisé en ce que** lesdits éléments de flexion sont prévus chacun avec au moins deux couches de matériau céramique piézo-électrique et une couche centrale conductrice, la couche centrale conductrice étant reliée à, et prise en sandwich entre, les deux couches de matériau céramique piézo-électrique.

31. Dispositif d'affichage selon les revendications 18 et 30, **caractérisé en ce que** des couches de matériau céramique piézo-électrique de deux éléments de flexion adjacents du premier ensemble qui se trouvent l'une en face de l'autre sont connectées de manière conductrice à une ligne d'alimentation en tension commune et **en ce que** des couches de matériau céramique piézo-électrique de chaque élément de flexion du premier ensemble sont connectées à des lignes d'alimentation en tension différentes.

32. Dispositif d'affichage selon la revendication 31, **caractérisé en ce que** la couche conductrice centrale de chaque élément de flexion du premier ensemble est connectée à une ligne d'alimentation de contrôle de tension individuelle.

33. Dispositif d'affichage selon les revendications 17 et 30, **caractérisé en ce que** des couches de matériau céramique piézo-électrique de deux éléments de flexion adjacents du deuxième ensemble qui se trouvent l'une en face de l'autre sont connectées de manière conductrice à une ligne d'alimentation en tension commune et **en ce que** des couches de matériau céramique piézo-électrique de chaque élément de flexion du deuxième ensemble sont connectées à des lignes d'alimentation en tension différentes.

34. Dispositif d'affichage selon la revendication 33, **caractérisé en ce que** la couche conductrice centrale de chaque élément de flexion du deuxième ensemble est connectée à une ligne d'alimentation de contrôle de tension individuelle.

35. Dispositif d'affichage selon les revendications 31 à 34, **caractérisé en ce que** des couches de matériau céramique piézo-électrique de deux éléments de flexion adjacents du premier ensemble et du deuxième ensemble, respectivement, qui se trouvent l'une en face de l'autre sont connectées de manière conductrice à une ligne d'alimentation en tension commune et **en ce que** des couches de matériau céramique piézo-électrique de chaque élément de flexion du premier ensemble et du deuxième ensemble sont connectées à des lignes d'alimentation en tension différentes.

36. Dispositif d'affichage selon la revendication 30, **caractérisé en ce que** le dispositif d'affichage est en outre équipé d'un circuit imprimé comprenant un circuit électronique servant à fournir des tensions aux couches de matériau céramique piézo-électrique des éléments de flexion, la couche conductrice centrale étant directement connectée de manière conductrice à une ligne d'alimentation en tension du circuit imprimé sans câbles ou fils électriques intermédiaires.

37. Dispositif d'affichage selon l'une quelconque des revendications précédentes, **caractérisé en ce que** le dispositif d'affichage est doté de paroi extérieures rigides qui s'étendent parallèlement à un plan de flexion ou à une direction de flexion dudit au moins un élément de flexion dans lequel/laquelle ledit au moins un élément de flexion peut fléchir.

38. Dispositif d'affichage selon la revendication 16, 20, 22 ou 24, **caractérisé en ce que** la pince est faite d'un matériau conducteur tel qu'un métal.

39. Dispositif d'affichage selon l'une quelconque des revendications précédentes, **caractérisé en ce que** l'un au moins des moyens à ressort comprend un ressort à lame.

40. Dispositif d'affichage selon la revendication 16, 20, 22, 24 ou 38, **caractérisé en ce que** chaque pince comprend une partie de corps centrale et une pluralité de ressorts à lame en forme de U reliés à la partie de corps centrale, chaque ressort à lame en forme de U constituant un élément de support qui comprend un moyen à ressort.

41. Dispositif d'affichage selon la revendication 40, **caractérisé en ce que** la partie de corps centrale et les ressorts à lame d'une pince constituent un ensemble intégré d'une seule pièce.

42. Dispositif d'affichage selon la revendication 8 ou 9 et selon la revendication 40 ou 41, **caractérisé en ce que** les éléments de support fixes sont obtenus par des ressorts à lame en forme de U qui sont fixes.
